# EUROPEAN PATENT APPLICATION

(11) **EP 3 514 337 A1**
(43) Date of publication of application: **24.07.2019**
(21) Application number: 18213306.6
(22) Date of filing: 18.12.2018
(51) Int. Cl.: F01D 25/18, F16N 7/38, F16C 33/66, F16C 37/00

(54) **GAS TURBINE ENGINE OIL CIRCULATION**

(30) Priority: 18.01.2018 GB 201800777
(71) Applicant: Rolls-Royce plc, London SW1E 6AT (GB)
(72) Inventor: Fomison, Neil, Derby, Derbyshire DE24 8BJ (GB); Lenzi, Alessio, Derby, Derbyshire DE24 8BJ (GB)
(74) Representative: Rolls-Royce plc

(57) **Abstract**

The present invention relates to an oil circulation system for a gas turbine engine. The system comprises a bearing chamber (301) surrounding a turbine shaft (308) of the engine, an oil feed injection line (305) arranged to supply oil from an oil collecting compartment to a plurality of oil injectors (306, 401, 402) within the bearing chamber (301), an oil exit pipe (309, 313) such as a vent or scavenging line, arranged to allow oil to exit the bearing chamber (301) and an oil supply pump arranged to recirculate oil from the oil collecting compartment to the oil feed injection line (305). One of the injectors (401, 402) is arranged to direct oil towards an inlet of the oil exit pipe (309, 313), thereby reducing the oil temperature in the exit pipe and, hence, mitigating the risk of auto-ignition in particular in the scavenging or vent pipes.

## Description

The present disclosure concerns an oil circulation system for a gas turbine engine, and in particular to a gas turbine engine comprising a bearing chamber with a plurality of oil injectors.

Bearing assemblies in gas turbine engines, particularly those on the combustion side, tend to be subjected to high temperatures and pressures during operation. Oil needs to be continuously recirculated within a bearing chamber to ensure adequate lubrication and cooling. To prevent oil leakage, a pressure differential between the high pressure environment outside the bearing chamber and a relatively lower pressure at ambient may be used to draw hot air inwards to the bearing chamber through the bearing chamber seals. Such seals may for example be labyrinthine seals. Drawing hot air in to the bearing chamber results in an oil-air mixture that, under certain conditions, can reach autoignition, which should be avoided if possible. The temperature of the air passing through the seals may for example be in the region of 320 to 350 degrees Celsius, while the autoignition temperature may be around 300 degrees Celsius for a typical oil-air composition with the bearing chamber. The risk of autoignition increases as the temperature of the bearing chamber rises and as the balance of oil to air changes. If the balance of oil to air is uncontrolled throughout the bearing chamber, a variation in this balance may result in an autoignition condition being reached at certain local positions. Predicting the distribution of oil-air balance throughout the bearing chamber and associated components is very difficult, and may be beyond the capabilities of modelling using computational fluid dynamics. As an example, if more than one scavenge line is employed for extracting oil from the bearing chamber it can be unknown what proportion of oil will flow into each scavenge line during operation, particularly when windage effects come into play during high speed operation. This will result in the oil-air balance in each scavenge line becoming more uncertain. Safety margins may therefore need to be greater than would otherwise be the case if more accurate predictions could be made.

If the flow velocity in an oil extraction pipe is low (i.e. below the flame speed), a fire initiated in the pipe may flash back into the bearing chamber. This is more likely in the case of a scavenge pipe rather than a vent pipe due to the generally lower velocities. The occurrence of an oil fire has potentially serious consequences, including structural damage and loss of oil system products/pressure that can lead to engine in-flight-shutdown and/or a hazardous condition if components fail due to overtemperature.

Within a jet engine a bearing chamber may be located in proximity of a hot environment, which has to be crossed by scavenge and vent pipes. An example is the High Pressure/Intermediate Pressure bearing chamber in a conventional three-shaft gas turbine engine, where feed and scavenge pipes have to cross the main gas path between the high pressure turbine and the intermediate pressure turbine. This can result in a significant temperature rise along the pipe. The uncertainty in air-oil contents, which is intrinsic to current design methods, is an additional challenge in designing the engine to be safe against oil fire.

The uncertainty in predicting the pipe air/oil contents of the current design methods can lead to costly re-designs based on the outcome of engine development and testing. Moreover, the amount of testing that can be carried out on a test-bed is limited by timescales and by the impossibility of reproducing all possible operating conditions at the margins of the certified operating envelope of the engine. The uncertainty in the pipe air/oil contents can therefore be a challenge for proving safe operation at the margin of the operating envelope, which can lead to over-design or a requirement for restrictive engine operating limitations.

According to a first aspect there is provided a gas turbine engine, comprising:
a bearing chamber surrounding a turbine shaft of the engine;
an oil feed injection line arranged to supply oil from an oil collecting compartment to a plurality of oil injectors within the bearing chamber;
an oil exit pipe arranged to allow oil to exit the bearing chamber;
an oil supply pump arranged to recirculate oil from the oil collecting compartment to the oil feed injection line,
wherein the plurality of oil injectors comprise an injector arranged to direct oil towards, or into, an inlet of the oil exit pipe.

The injector arranged to direct oil towards, or into, an inlet of the oil exit pipe may be configured to provide an oil flow of between 1 and 5% of the oil flow provided by the oil supply pump to the oil feed injection line.

In some examples, a scavenge line may comprise the oil exit pipe, the scavenge line connecting the bearing chamber with an oil collecting compartment and comprising a scavenge pump arranged to pump oil through the scavenge line to the oil collecting compartment. A benefit of providing the injector to direct oil towards, or into, the inlet of the oil exit pipe is that the oil-air mixture in the exit pipe is thereby altered so as to reduce the possibility of autoignition in the exit pipe, together with the cooling effect the additional oil has on the mixture in the exit pipe. This benefit is present even with only a single pipe exiting the bearing chamber. The benefit increases if there is more than one pipe exiting the bearing chamber due to the uncertainty on the quantity of oil leaving the chamber via each pipe. In some examples, the scavenge line may be a first scavenge line, the gas turbine engine comprising a second scavenge line connecting the bearing chamber with the oil collecting compartment and comprising a scavenge pump arranged to pump oil through the second scavenge line to the oil collecting compartment, the plurality of injectors comprising an injector arranged to direct oil towards an inlet of the second scavenge line. In some examples a vent pipe may comprise the oil exit pipe, the vent pipe connecting the bearing chamber to an external ambient atmosphere via an air-oil separator.

A vent pipe may connect the bearing chamber to an external ambient atmosphere via an air-oil separator, wherein the plurality of oil injectors comprise a further injector arranged to direct oil towards an inlet of the vent pipe.

An advantage of providing an oil injector to direct oil towards an exit pipe is to increase the bearing chamber sealing air temperature which can be reached before oil firing commences, thereby preventing structural damage and loss of engine oil system contents/pressure resulting in shutdown or allowing for the use of hotter sealing air.

The additional oil quantity required can be small compared to the total oil feed flow, and can be readily provided with relatively little modification to the oil feed system. The minimum amount of oil in a scavenge or vent pipe can be easily controlled at the design stage by sizing the oil injector, or jet, appropriately.

A result of using an additional oil injector is that the quantity of oil in the pipe does not depend on the behaviour of the general two component flow in the bearing chamber. Hence there is less emphasis on the ability to predict the complex two component bearing chamber fluid mechanics.

In general therefore, an advantage is a reduction in the possibility of autoignition in an exit pipe by cooling the air-oil mixture whilst also raising the bulk oil-air mass ratio to above the rich flammability limit, and encouraging more rapid thermal mixing of air and oil. As a result hotter sealing air can be introduced in the bearing chamber without resulting in an oil fire. Alternatively, extreme operating conditions or system failures that may lead to the introduction of hot air into the bearing chamber exceeding test limits will not necessarily lead to autoignition conditions due to the increased safety margin.

An additional oil injector can be easily designed as a minor modification to an existing oil feed system or bearing squeeze film damper, which are required in any bearing chamber in a conventional jet engine. One or more additional oil injectors can therefore be applied to both existing and future architecture with relatively minor additional cost/resources required.

A cooling oil jet may be obtained by a modification to the squeeze film damper oil supply, i.e. such that the injector is configured to direct oil that is provided by a squeeze film damper oil supply. This allows the oil jet to reach the scavenge and vent pipe mouths, which are located in the walls of the bearing chamber at different angular positions.

The cooling oil jet can also be designed as a modification to the bearing chamber oil feed system through for instance the modification of the exiting oil jet assembly in cases where the scavenge and vent pipes are sufficiently close to the existing jet block.

According to a second aspect there is provided a method of supplying oil to a bearing chamber of a gas turbine engine according to the first aspect, the method comprising supplying oil from an oil collecting compartment to a plurality of oil injectors within the bearing chamber via an oil feed injection line, wherein the plurality of oil injectors comprises an injector directing oil towards an inlet of the oil exit pipe.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a schematic front elevation sectional view of an oil circulation system for a gas turbine engine;
**Figure 3** is a schematic side elevation sectional view of an example oil circulation system for a gas turbine engine; and
**Figure 4** is a detailed schematic side elevation section view of the bearing chamber and associated components from Figure 3, together with additional oil injectors.

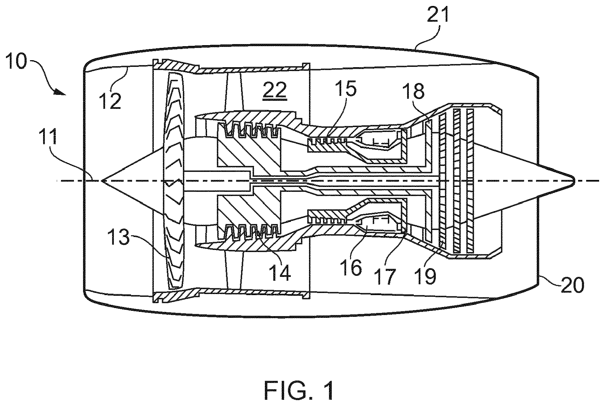

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

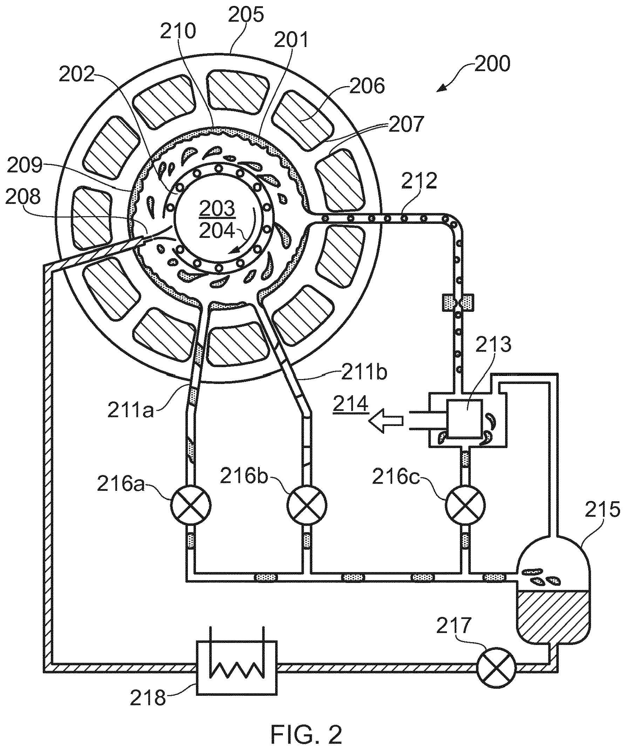

Figure 2 is a schematic drawing showing a front elevation view through an example gas turbine engine 200. The engine 200 comprises a bearing chamber 201, within which a bearing 202 supports a shaft 203, which rotates within the bearing 202 in the direction 204. The bearing chamber 201 is mounted within an outer structure casing 205, which incorporates gas flow paths 206 separated by support vanes 207. An oil injector 208 is provided within the bearing chamber 201 to provide a flow of oil for lubrication and cooling. The oil will tend to form a film of oil 209 along the bearing chamber wall 210. The oil exits the bearing chamber 201 through one or more scavenge pipes 211a, 211b (two of which are shown in this example). A smaller amount of oil exits the bearing chamber through a vent pipe 212, carried along in the form of small particles of oil by air exiting the bearing chamber 210. The vent pipe 212 leads to an oil/air separator 213, which directs the air to an external ambient environment 214 and any oil towards an oil collecting chamber 215.

Scavenge pumps 216a-c pump oil exiting from the bearing chamber 210 from the scavenge pipes 211a, 211b and the vent pipe 212 to the oil collecting chamber 215. An oil feed pump 217 feeds oil from the collecting chamber 215 back to the oil injector 208 via an oil cooler 218.

Each of the scavenge and vent lines 211a, 211b, 212 pass through one of the support vanes that are within a hot gas flow part of the engine 200. High temperatures may therefore be reached for any air-oil mixtures passing through these lines 211a, 211b, 212. In some cases, the temperature reached within the line passing through a vane may reach an autoignition temperature. This section of each line is therefore the most vulnerable to the risk of autoignition. Depending on the particular design of engine and the conditions of operation, the vent line 212 or the scavenge line(s) 211a, 211b may be more vulnerable to autoignition.

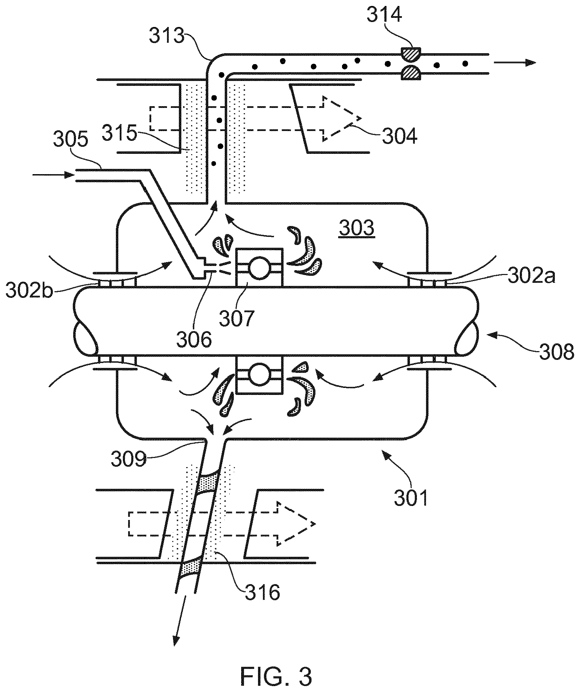

Figure 3 is a schematic drawing showing in a sectional side elevation view an example oil circulation system, together with further components of a typical bearing assembly for a gas turbine engine. The bearing chamber 301 comprises seals 302a, 302b, which provide at least a partial seal between the bearing chamber 301 and the shaft 308. To maintain oil within the bearing chamber 301, a pressure differential between the internal volume 303 of the bearing chamber 301 and a hot secondary air system surrounding the bearing chamber 301 forces hot gas through the seals 302a, 302b into the internal volume 303. This hot air then mixes with the oil within the internal volume 303 before exiting through the vent pipe 313 via a flow restrictor 314 towards an air-oil separator.

Oil enters the internal volume 303 of the bearing chamber 301 through an oil feed line 305. An injector 306 is positioned within the bearing chamber 301 to direct oil towards the bearing 307 mounted to the drive shaft 308. As the drive shaft 308 rotates, oil is distributed around the internal volume 303 of the bearing chamber 301 and tends to flow under gravity towards the scavenge pipes 309 (one of which is illustrated in Figure 3), to be drawn towards the oil collecting chamber by scavenge pumps (not shown in Figure 3).

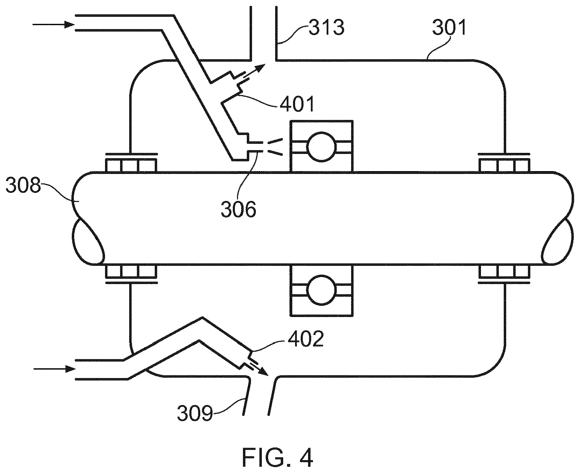

Figure 4 illustrates a more detailed view of the bearing chamber 301 from Figure 3, with additional oil injectors 401, 402. A first additional oil injector 401 directs oil towards the inlet of the vent pipe 313, which serves to increase the ratio of oil to air at the vent pipe inlet, as well as providing cooling of the oil-air mixture entering the vent pipe. A second additional oil injector 402 directs oil towards the inlet of the scavenge pipe 309, which also serves to increase the ratio of oil to air at the scavenge pipe inlet and provide cooling of the mixture entering the scavenge pipe 309. In both cases, the effect is to reduce the risk of autoignition as the oil-air mixture passes through the vent or scavenge pipes 309, 313. In some embodiments, an oil injector may be provided to direct oil towards either the vent pipe or the scavenge pipe, while in other embodiments oil may be directed to both the vent pipe and the scavenge pipe(s). Other features of the bearing chamber and gas turbine engine may be similar to those illustrated in Figures 2 and 3 and described above.

Referring again to Figure 3, in some embodiments the vent and/or scavenge pipes 313, 309 may be insulated from the hot gas flow passing around the vane through which the pipes pass by being surrounded by a layer of insulation 315, 316. This further reduces the risk of autoignition within the vent or scavenge pipe 313, 309.

A typical scavenge pump capacity is around 600cc/s. Assuming that the rich flammability oil-air ratio limit is approximately 0.9 and typical air and oil densities in the scavenge pipe are 4kg/m³ and 920kg/m³ respectively, a minimum oil flow of only around 2cc/s may be required. However, even this small quantity cannot be guaranteed to occur under all conditions, even though 2cc/s represents only approximately 1% of the total oil feed to the chamber with two scavenge pipes and a single vent pipe. For a 5/8" (1.6 cm) diameter pipe, the bulk velocity may be around 3m/s and the mean residence time to exit the engine core (-0.5m) is of the same order of magnitude as the ignition delay time.

An example design involving additional oil injectors may arrange for a deliberate additional oil flow of around 10cc/s, or around 5% of the total chamber oil feed, to ensure the oil-air mixture ratio exceeds the rich oil-air flammability limit by a factor or around 5, thus ensuring auto-ignition is not possible irrespective of residence time. Furthermore, this additional oil will increase the mixture thermal capacity and therefore reduce the temperature rise of the mixture as the pipe traverses the engine core. In a general aspect, the or each additional oil injector may be configured to provide a flow of between 1 and 5% of the total amount of oil flow injected into the bearing chamber.

It will be understood that the invention is not limited to the embodiments above-described and various modifications and improvements can be made without departing from the concepts herein. Except where mutually exclusive, any of the features may be employed separately or in combination with any other features and the disclosure extends to and includes all combinations and sub-combinations of one or more features described herein.

## Claims

1. A gas turbine engine (200), comprising:
a bearing chamber (301) surrounding a turbine shaft (308) of the engine;
an oil feed injection line (305) arranged to supply oil from an oil collecting compartment (215) to a plurality of oil injectors (306, 401, 402) within the bearing chamber (301);
an oil exit pipe (309, 313) arranged to allow oil to exit the bearing chamber (301);
an oil supply pump (217) arranged to recirculate oil from the oil collecting compartment (215) to the oil feed injection line (305),
wherein the plurality of oil injectors comprises an injector (401, 402) arranged to direct oil towards an inlet of the oil exit pipe (309, 313).

2. The gas turbine engine (200) of claim 1 wherein the injector (309, 313) arranged to direct oil towards an inlet of the oil exit pipe is configured to provide an oil flow of between 1 and 5% of the oil flow provided by the oil supply pump (217) to the oil feed injection line (305).

3. The gas turbine engine (200) of claim 1 or claim 2 wherein a scavenge line (309) comprises the oil exit pipe, the scavenge line (309) connecting the bearing chamber (301) with the oil collecting compartment (215) and comprising a scavenge pump (216a, 216b) arranged to pump oil through the scavenge line (309) to the oil collecting compartment (217).

4. The gas turbine engine (200) of claim 3 wherein the scavenge line is a first scavenge line (211a), the gas turbine engine comprising a second scavenge line (211b) connecting the bearing chamber (201) with the oil collecting compartment (215) and comprising a scavenge pump (216b) arranged to pump oil through the second scavenge line (211b) to the oil collecting compartment (215), the plurality of injectors comprising an injector arranged to direct oil towards an inlet of the second scavenge line.

5. The gas turbine engine (200) of claim 1 or claim 2 wherein a vent pipe (313) comprises the oil exit pipe, the vent pipe (313) connecting the bearing chamber (301) to an external ambient atmosphere via an air-oil separator (213).

6. The gas turbine engine (200) of claim 3 or claim 4 comprising a vent pipe (313) connecting the bearing chamber (301) to an external ambient atmosphere (214) via an air-oil separator (213), wherein the plurality of oil injectors comprise a further injector (401) arranged to direct oil towards an inlet of the vent pipe (313).

7. A method of supplying oil to a bearing chamber of a gas turbine engine (200) according to any preceding claim, the method comprising supplying oil from an oil collecting compartment (215) to a plurality of oil injectors (306, 401, 402) within the bearing chamber (301) via an oil feed injection line (305), wherein the plurality of oil injectors comprises an injector (401, 402) directing oil towards an inlet of the oil exit pipe (309, 313).
